# EUROPÄISCHE PATENTSCHRIFT

(11) **EP 3 488 681 B1**
(45) Veröffentlichungstag und Bekanntmachung des Hinweises auf die Patenterteilung: **01.12.2021**
(21) Anmeldenummer: 18206478.2
(22) Anmeldetag: 15.11.2018
(51) Int. Cl.: A01D 34/83

(54) **SCHNEIDVORRICHTUNG MIT AN EINEM KEILRIEMEN BEFESTIGTEN MESSERN**
CUTTING DEVICE WITH CUTTERS FIXED TO A V-BELT
DISPOSITIF DE COUPE POURVU DE LAMES FIXÉES SUR UNE COURROIE TRAPÉZOÏDALE

(30) Priorität: 23.11.2017 DE 102017220920
(43) Veröffentlichungstag der Anmeldung: 29.05.2019
(73) Patentinhaber: Deere & Company, Moline, IL 61265 (US)
(72) Erfinder: Ulmer, Jens, 68163 Mannheim (DE)
(74) Vertreter: Holst, Sönke

(56) Entgegenhaltungen:
- BE-A- 676 379
- DE-A1- 1 757 318
- FR-A1- 2 222 936
- US-B1- 6 240 714

## Beschreibung

Die Erfindung betrifft eine Schneidvorrichtung zum Abschneiden von Pflanzenmaterial, umfassend einen um zumindest zwei Riemenscheiben umlaufenden Keilriemen und wenigstens eine mit dem Keilriemen und einem Messer gekoppelte Halterung und ein damit ausgestattetes Schneidwerk für einen Mähdrescher.

### Stand der Technik

Schneidwerke für Mähdrescher umfassen Mähmesser, die im Zusammenwirken mit stationären Gegenmessern dazu dienen, das Erntegut abzuschneiden. Üblicherweise sind die Mähmesser an einem Messerbalken befestigt, der an der Frontseite des Schneidwerks an dessen Boden angebracht ist und durch einen Exzentertrieb in eine kontinuierlich Hin- und Herbewegung gebracht wird, vgl. beispielsweise DE 197 34 337 A1. Ähnliche Anordnungen werden auch als Seitenschneidwerke zur Rapsemte verwendet (DE 81 29 138 U1). Der Antrieb und der Messerbalken sind relativ aufwändig und weisen ein recht hohes Gewicht auf. Zudem wird zum reinen Hin- und Herbewegen des Messers eine beträchtliche Menge an Leistung benötigt, ohne dass ein Schnittvorgang stattfindet, und es werden ungewünschte Vibrationen erzeugt.

Es wurde weiterhin vorgeschlagen (DE 25 45 633 A1, DE 27 07 030 A1, BE 676 379 A und FR 2 222 936 A1), als Schneidanordnung einen Keilriemen zu verwenden, der um Riemenscheiben umläuft, von denen eine angetrieben wird. Zur Befestigung der Messer am Keilriemen wird der Keilriemen mittig, entlang der Keilflächen gelocht, sodass die Löcher radial zur Riemenscheibe orientiert sind, wenn der Keilriemen um sie umläuft. In die Löcher werden Schauben oder Nieten eingeführt, um Halterungen am Keilriemen zu fixieren, an denen die Messer befestigt werden, die mit den Messern einteilig sein können.

Es wurde auch vorgeschlagen (DD 153 045 A1), die Messer an einem Zahnriemen anzubringen, dessen Rückseite verzahnt ist. Dazu sind Halterungen vorgesehen, die an den Ober- und Unterseiten des Zahnriemens anliegen und durch Bolzen untereinander verbunden sind, die den Zahnriemen zwischen sich einschließen. Die an der verzahnten Rückseite anliegenden Bolzen befinden sich in Tälern der Verzahnung. Diese Anordnung hat den Nachteil, dass in den Zahnrädern Ausnehmungen vorzusehen sind, in denen die Bolzen Aufnahme finden. Die Teilung der Zahnriemen und Zahnräder ist demnach fest vorgegeben.

### Aufgabe

Nach alledem ist erkennbar, dass die Anbringung der Messer an den Riemen im Stand der Technik durch kraft- oder formschlüssige Mittel erfolgt, für welche zuerst Löcher in den Riemen einzubringen sind, welche letzteren schwächen, oder die an einer Verzahnung eines Zahnriemens angreifen, was Nachteile bei dessen Antrieb zur Folge hat.

Die der Erfindung zu Grunde liegende Aufgabe wird darin gesehen, diese Nachteile zu vermeiden oder zumindest zu vermindern.

### Erfindung

Diese Aufgabe wird erfindungsgemäß durch die Lehre der Patentansprüche 1 und 8 gelöst, wobei in den weiteren Patentansprüchen Merkmale aufgeführt sind, welche die Lösung in vorteilhafter Weise weiterentwickeln.

Eine Schneidvorrichtung zum Abschneiden von Pflanzenmaterial umfasst einen um zumindest zwei Riemenscheiben, von denen wenigstens eine antreibbar ist, umlaufenden Keilriemen und wenigstens eine mit dem Keilriemen und einem Messer gekoppelte Halterung. Die Halterung ist kraftschlüssig mit dem Keilriemen gekoppelt.

Die Halterung umfasst zwei Halterungselemente, die den Keilriemen zwischen sich einschließen und gegeneinander vorgespannt sind. Die Trennungslinie der Halterungselemente verläuft quer zur Längsrichtung des Keilriemens (die sich tangential zur Riemenscheibe erstreckt, um welche der Keilriemen umläuft) und radial zur Riemenscheibe. Ein vom Keilriemen beabstandetes Vorspannmittel, das die Halterungselemente gegeneinander vorspannt und somit den Kraftschluss zwischen den Halterungselementen der Halterung und dem Keilriemen herstellt, ist quer zur Trennungslinie orientiert und erstreckt sich parallel zur Drehachse der Riemenscheibe, um welche der Keilriemen umläuft.

Auf diese Weise vermeidet man die Nachteile des Standes der Technik, denn der Keilriemen muss nicht mit Öffnungen o.dgl. versehen werden, um die Halterung für das Messer daran zu befestigen. Vielmehr wird die Halterung am Keilriemen durch eine Klemmung kraftschlüssig befestigt.

Das Vorspannmittel kann eine oder mehrere in Querrichtung und/oder Längsrichtung des Keilriemens versetzte Schrauben oder Nieten umfassen.

Die Halterung kann zusätzlich formschlüssig mit dem Keilriemen gekoppelt sein. Hierzu kann die Halterung durch überstehende oder vertiefte Bereiche des Keilriemens, die mit entsprechenden Formen der Halterung zusammenwirken, mit dem Keilriemen gekoppelt sein.

Die besagten Bereiche können sich an den äußeren Kanten (Ecken) des Keilriemens und/oder an dessen Außenflächen befinden und sich entlang der Längsrichtung des Keilriemens über dessen gesamte Länge oder nur einen Teil davon erstrecken.

Es können Erhöhungen der Halterung vorgesehen sein, die sich in die schrägen Außenflächen des Keilriemens hineindrücken und dort Vertiefungen erzeugen, um die Halterung am Keilriemen durch Form- und Kraftschluss zu fixieren.

Die erfindungsgemäße Schneidvorrichtung kann an beliebigen Geräten und Maschinen verwendet werden, die zum Schneiden von Pflanzen oder deren Teilen dienen. Insbesondere eignet sie sich als Seitenschneidwerk an einem Getreideschneidwerk für einen Mähdrescher, bei dem das Seitenschneidwerk bei der Rapsernte als Seitentrenner dient.

### Ausführunasbeispiel

In den Zeichnungen ist ein nachfolgend näher beschriebenes Ausführungsbeispiel der Erfindung dargestellt. Es zeigt:
- Fig. 1: eine Draufsicht auf eine Schneidvorrichtung,
- Fig. 2: einen Schnitt entlang der Linien 2-2 der Figur 1, und
- Fig. 3: eine vergrößerte Ansicht des Keilriemens.

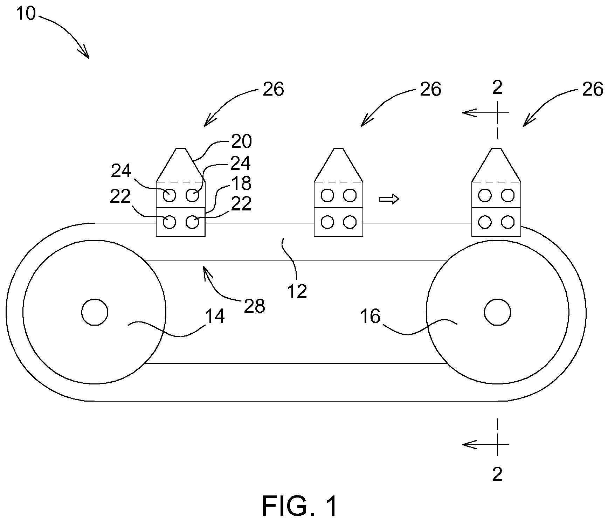

Die Figur 1 zeigt eine Ansicht einer Schneidvorrichtung 10 zum Abschneiden von Pflanzenmaterial. Die Schneidvorrichtung 10 umfasst einen Keilriemen 12, der um zwei Riemenscheiben 14, 16 umläuft. Eine der Riemenscheiben 14, 16 ist mit einem Antrieb verbunden, der sie im Betrieb in eine fortdauernde oder hin- und hergehende Drehbewegung versetzt. Die Riemenscheiben 14, 16 sind an einem nicht gezeigten Gestell angebracht. Weiterhin kann eine Spannrolle (nicht gezeigt) vorgesehen sein, die an der Innenseite des Keilriemens 12 angreift und diesen zumindest dann vorspannt, wenn sich die Schneidvorrichtung 10 im Betrieb befindet. Alternativ oder zusätzlich kann eine oder beide der Riemenscheiben 14, 16 nach außen vorgespannt sein, um die nötige Spannung des Keilriemens 12 bereitzustellen.

Am Keilriemen 12 sind eine Anzahl an in Längsrichtung des Keilriemens 12 voneinander beabstandete, gleichmäßig oder in unterschiedlichen Abständen über die Länge des Keilriemens 12 verteilte Messerzusammenbauten 26 angebracht, die jeweils ein Messer 20 und einen Halterungszusammenbau 28 umfassen. Die Messer 20 sind hier als Mähmesser dargestellt, wie sie an Schneidwerken für Mähdrescher gebräuchlich sind.

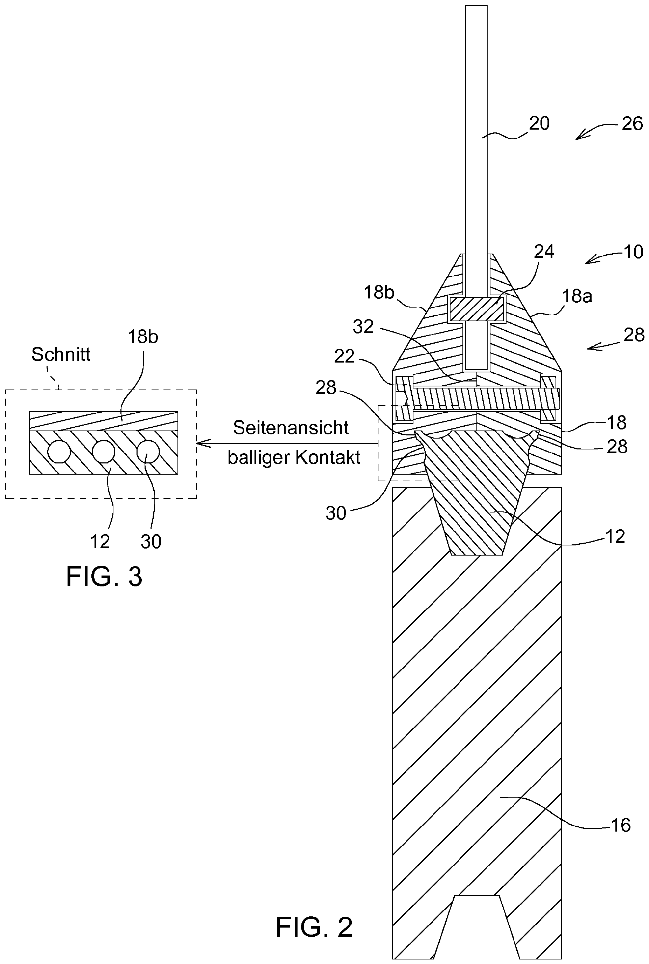

Wie sich in der Gesamtschau der Figuren 1 und 2 ergibt, umfasst ein Halterungszusammenbau 28 jeweils eine Halterung 18, die sich aus zwei Halterungselementen 18a und 18b zusammensetzt. Die Trennungslinie 32 zwischen den Halterungselementen 18a und 18b verläuft quer zum Keilriemen 12, d.h. radial zur Riemenscheibe 16 der Figur 2.

Die Halterungselemente 18a, 18b müssen nicht unbedingt in der in Figur 2 gezeigten Weise symmetrisch sein. In der dargestellten Ausführungsform sind die Halterungselemente 18a, 18b im rückwärtigen, dem Keilriemen 12 benachbarten Bereich (abgesehen von der inneren, zur Keilform des Keilriemens 12 komplementären Schrägung) rechteckigen Querschnitts und im vorderen, dem Messer 20 benachbarten Bereich nach vorn keilförmig zulaufend profiliert. In der Draufsicht der Figur 1 sind die Halterungselemente 18a, 18b rechteckig, obwohl sie auch nach vorn (d.h. in Figur 1 nach oben hin) spitz zulaufend sein könnten.

Die Befestigung der Halterungselemente 18a, 18b (und somit des Halterungszusammenbaus 28 und der Messer 20) erfolgt durch zwei Schrauben 22 (oder Nieten oder andere Elemente, die z.B. als Clip o.ä. aus Kunststoff oder Metall gefertigt sein könnten), welche die Halterungselemente 18a, 18b zusammenziehen und den dazwischen angeordneten, äußeren Bereich des Keilriemens 12 zwischen den innenseitig komplementär zum Keilriemen 12 abgeschrägten Halterungselementen 18a, 18b einklemmen. Auf diese Weise wird der Keilriemen 12 zwischen den Halterungselementen 18a, 18b eingeklemmt und fixiert. Die Schrauben 22 wirken mit Muttern zusammen und sind in Längsrichtung des Keilriemens 12 zueinander versetzt. An den Halterungselementen 18a, 18b ist jeweils ein Messer 20 durch zwei in Längsrichtung des Keilriemens 12 zueinander versetzte Scherbolzen 24 fixiert, die sich in Sacklöcher der Halterungselemente 18a, 18b und durch Löcher im Messer 20 erstrecken. Anders als in der Figur 2 gezeigt, in welcher ein gewisses Spiel zwischen dem Messer 20 und den Halterungselementen 18a, 18b besteht, könnte auch vorgesehen sein, dass die Schrauben 22 (oder anderen Elemente, vgl. oben), das Messer 20 zwischen den Halterungselementen 18a, 18b einklemmen, d.h. kraftschlüssig fixieren, wobei die Schrauben 22 (oder anderen Elemente) sich durch die erwähnten Löcher der Messer erstrecken.

Eine zusätzliche Fixierung der Halterungselemente 18a, 18b erfolgt durch Formschluss. Hierzu sind diagonal nach außen überstehende, erste Bereiche 28 an den äußeren Ecken des Keilriemens 12 vorgesehen, die sich in entsprechend geformte Vertiefungen der Halterungselemente 18a, 18b hinein erstrecken. Die Bereiche 28 erstrecken sich über die gesamte Länge des Keilriemens 12. Zudem sind konvexe Erhöhungen 30 der Halterungselemente 18a, 18b vorgesehen, die sich in die schrägen Außenflächen des Keilriemens 12 hineindrücken und dort konkave Vertiefungen erzeugen, sodass sich ein balliger Kontakt zwischen den konkaven Erhöhungen 30 der Halterungselemente 18a, 18b und den entstehenden Vertiefungen im Keilriemen 12 ergibt, der einen Kraft- und Formschluss verwirklicht. Die Erhöhungen 30 könnten auch kantig oder krallenartig ausgeführt sein.

Anstelle von Messern 20 (oder zusätzlich dazu) könnten an einigen oder allen Halterungszusammenbauten 28 auch schaufelartige Förderelemente (nicht gezeigt) angebracht werden, die zur Abförderung der abgeschnittenen Pflanzenteile dienen.

## Patentansprüche

1. Schneidvorrichtung (10) zum Abschneiden von Pflanzenmaterial, umfassend einen um zumindest zwei Riemenscheiben (14, 16) umlaufenden Keilriemen (12) und wenigstens eine mit dem Keilriemen (12) und einem Messer (20) gekoppelte Halterung (18), wobei die Halterung (18) kraftschlüssig mit dem Keilriemen (12) gekoppelt ist und zwei Halterungselemente (18a, 18b) umfasst, die den Keilriemen (12) zwischen sich einschließen und gegeneinander vorgespannt sind, **dadurch gekennzeichnet, dass** eine Trennungslinie (32) der Halterungselemente (18a, 18b) quer zur Längsrichtung des Keilriemens (12) und radial zur Riemenscheibe (14, 16) verläuft und ein sich parallel zur Drehachse der Riemenscheibe (14, 16) erstreckendes, im Abstand vom Keilriemen (12) angeordnetes Vorspannmittel zur Vorspannung der Halterungselemente (18a, 18b) quer zur Trennungslinie (32) orientiert ist.

2. Schneidvorrichtung (10) nach Anspruch 1, wobei das Vorspannmittel eine oder mehrere in Quer- und/oder Längsrichtung des Keilriemens (12) versetzte Schrauben (22) umfasst.

3. Schneidvorrichtung (10) nach einem der vorhergehenden Ansprüche, wobei die Halterung (18) zusätzlich formschlüssig mit dem Keilriemen (12) gekoppelt ist.

4. Schneidvorrichtung (10) nach Anspruch 3, wobei die Halterung (18) durch überstehende Bereiche (28) des Keilriemens (12), die mit entsprechenden Formen der Halterung (18) zusammenwirken, mit dem Keilriemen (12) gekoppelt ist.

5. Schneidvorrichtung (10) nach Anspruch 4, wobei die Bereiche (28) sich an den äußeren Kanten des Keilriemens (12) und/oder an dessen Außenflächen befinden.

6. Schneidvorrichtung (10) nach Anspruch 4 oder 5, wobei die Bereiche (28) sich entlang der Längsrichtung des Keilriemens (12) oder nur einen Teil davon erstrecken.

7. Schneidvorrichtung (10) nach einem der Ansprüche 1 bis 6, wobei Erhöhungen (30) der Halterung (18) vorgesehen sind, die sich in die schrägen Außenflächen des Keilriemens (12) hineindrücken und dort Vertiefungen erzeugen.

8. Schneidwerk für einen Mähdrescher mit einer Schneidvorrichtung (10) nach einem der vorhergehenden Ansprüche als Seitenschneidwerk.

## Claims

1. Cutting device (10) for cutting plant material, comprising a V-belt (12) circulating about at least two belt pulleys (14, 16) and at least one holder (18) coupled to the V-belt (12) and a knife (20), wherein the holder (18) is coupled to the V-belt (12) in a force-fitting manner and comprises two holder elements (18a, 18b) that enclose the V-belt (12) between one another and are preloaded towards one another, **characterized in that** a dividing line (32) of the holder elements (18a, 18b) extends transversely to the longitudinal direction of the V-belt (12) and radially with respect to the belt pulley (14, 16), and a preloading means for preloading the holder elements (18a, 18b), which extends parallel to the axis of rotation of the belt pulley (14, 16) and is arranged at a distance from the V-belt (12), is oriented transversely to the dividing line (32).

2. Cutting device (10) according to Claim 1, wherein the preloading means comprises one or more screws (22) that are offset in the transverse and/or longitudinal direction of the V-belt (12).

3. Cutting device (10) according to either of the preceding claims, wherein the holder (18) is additionally coupled to the V-belt (12) in a form-fitting manner.

4. Cutting device (10) according to Claim 3, wherein the holder (18) is coupled to the V-belt (12) by protruding regions (28) of the V-belt (12) that cooperate with corresponding formations of the holder (18).

5. Cutting device (10) according to Claim 4, wherein the regions (28) are located at the outer edges of the V-belt (12) and/or on the outer surfaces thereof.

6. Cutting device (10) according to Claim 4 or 5, wherein the regions (28) extend along the longitudinal direction of the V-belt (12) or along only a part thereof.

7. Cutting device (10) according to one of Claims 1 to 6, wherein elevations (30) of the holder (18) are provided, which press into the inclined outer faces of the V-belt (12) and create recesses therein.

8. Cutting unit for a combine harvester, having a cutting device (10) according to one of the preceding claims, as lateral cutting unit.

## Revendications

1. Dispositif de coupe (10) pour la coupe de matériau végétal, comprenant une courroie trapézoïdale (12) circulant autour d'au moins deux poulies de courroie (14, 16) et au moins un support (18) couplé à la courroie trapézoïdale (12) et à une lame (20), le support (18) étant couplé par accouplement de force à la courroie trapézoïdale (12) et comportant deux éléments de support (18a, 18b), qui enserrent la courroie trapézoïdale (12) entre eux et sont précontraints l'un contre l'autre, **caractérisé en ce qu'**une ligne de séparation (32) des éléments de support (18a, 18b) s'étend perpendiculairement à la direction longitudinale de la courroie trapézoïdale (12) et radialement par rapport à la poulie de courroie (14, 16), et un moyen de précontrainte, agencé à distance de la courroie trapézoïdale (12), s'étendant parallèlement à l'axe de rotation de la poulie de courroie (14, 16), pour la précontrainte des éléments de support (18a, 18b), est orienté perpendiculairement à la ligne de séparation (32).

2. Dispositif de coupe (10) selon la revendication 1, **caractérisé en ce que** le moyen de précontrainte comporte une ou plusieurs vis (22) décalées dans la direction transversale et/ou longitudinale de la courroie trapézoïdale (12).

3. Dispositif de coupe (10) selon l'une quelconque des revendications précédentes, le support (18) étant en outre couplé par accouplement de forme à la courroie trapézoïdale (12).

4. Dispositif de coupe (10) selon la revendication 3, le support (18) étant couplé à la courroie trapézoïdale (12) par des zones en saillie (28) de la courroie trapézoïdale (12), qui coopèrent avec des formes correspondantes du support (18).

5. Dispositif de coupe (10) selon la revendication 4, les zones (28) se trouvant au niveau des bords extérieurs de la courroie trapézoïdale (12) et/ou au niveau de ses surfaces extérieures.

6. Dispositif de coupe (10) selon la revendication 4 ou 5, les zones (28) s'étendant le long de la direction longitudinale de la courroie trapézoïdale (12) ou uniquement une partie de celle-ci.

7. Dispositif de coupe (10) selon l'une quelconque des revendications 1 à 6, des élévations (30) du support (18) étant prévues, qui s'enfoncent dans les surfaces extérieures obliques de la courroie trapézoïdale (12) et y forment des creux.

8. Unité de coupe pour une moissonneuse munie d'un dispositif de coupe (10) selon l'une quelconque des revendications précédentes en tant qu'unité de coupe latérale.
